# EUROPEAN PATENT APPLICATION

(11) **EP 4 615 130 A1**
(43) Date of publication of application: **10.09.2025**
(21) Application number: 23884846.9
(22) Date of filing: 30.10.2023
(51) Int. Cl.: H04W 72/53

(54) **HYBRID AUTOMATIC REPEAT REQUEST ACKNOWLEDGEMENT (HARQ-ACK) INFORMATION FEEDBACK METHOD AND APPARATUS, AND RELATED PRODUCT**

(30) Priority: 04.11.2022 CN 202211380022
(71) Applicant: Vivo Mobile Communication Co., Ltd., Dongguan, Guangdong 523863 (CN)
(72) Inventor: LI, Na, Dongguan, Guangdong 523863 (CN)
(74) Representative: Murgitroyd & Company
(86) International application number: PCT/CN2023/127772
(87) International publication number: WO 2024/093916

(57) **Abstract**

This application discloses a hybrid automatic repeat request acknowledgement HARQ-ACK information feedback method and apparatus, and a related product, and relates to the field of communications technologies. The HARQ-ACK information feedback method in embodiments of this application includes: A terminal determines target HARQ-ACK feedback information (101), where the target HARQ-ACK feedback information is feedback information corresponding to a first downlink channel, the first downlink channel is a semi-persistent scheduling downlink channel, and a feedback mode of the target HARQ-ACK feedback information is a first feedback mode. The terminal determines a target resource from resources in a target resource configuration (102), where the target resource configuration includes at least one of the following: a resource configuration corresponding to the first feedback mode, a resource configuration corresponding to a second feedback mode, and a resource configuration corresponding to unicast feedback. The terminal executes a feedback procedure of the target HARQ-ACK feedback information on the target resource (103), where the first feedback mode is a NACK-only feedback mode, and the second feedback mode is an ACK or NACK feedback mode.

## Description

This application claims priority to Chinese Patent Application No. 202211380022.6, filed with the China National Intellectual Property Administration on November 4, 2022 and entitled "HYBRID AUTOMATIC REPEAT REQUEST ACKNOWLEDGEMENT HARQ-ACK INFORMATION FEEDBACK METHOD AND APPARATUS, AND RELATED PRODUCT", which is incorporated herein by reference in its entirety.

### TECHNICAL FIELD

This application relates to the field of communications technologies, and specifically, to a HARQ-ACK information feedback method and apparatus, and a related product.

### BACKGROUND

At present, in a scenario in which a terminal uses a negative acknowledgement only (Negative Acknowledgement Only, NACK-only) feedback mode to feed back hybrid automatic repeat request acknowledgement (Hybrid Automatic Repeat Request Acknowledgement, HARQ-ACK) information of a multicast physical downlink shared channel (Physical Downlink Shared Channel, PDSCH) to a network side device, to feed back HARQ-ACK information corresponding to a plurality of multicast PDSCHs in one physical uplink control channel (Physical Uplink Control Channel, PUCCH) slot, the network side device may configure a large number of PUCCH resources for the terminal, so that the terminal may determine a corresponding PUCCH resource from the large number of PUCCH resources according to different HARQ-ACK information, and therefore the terminal may feed back the HARQ-ACK information corresponding to the plurality of multicast PDSCHs on the determined PUCCH resource.

However, the terminal may need to use the NACK-only feedback mode to feed back HARQ-ACK information corresponding to a plurality of multicast semi-persistent scheduling (Semi-Persistent-Scheduling, SPS) PDSCHs in one PUCCH slot, but the network side device may configure only a small number of PUCCH resources for the terminal for the HARQ-ACK information corresponding to the SPS PDSCH. As a result, the PUCCH resources may be insufficient, and the terminal cannot feed back the HARQ-ACK information corresponding to the plurality of multicast SPS PDSCHs to the network side device.

Consequently, communication effectiveness declines.

### SUMMARY

Embodiments of this application provide a HARQ-ACK information feedback method and apparatus, and a related product, to resolve a problem of a decline in communication effectiveness.

According to a first aspect, a HARQ-ACK information feedback method is provided, applied to a terminal. The method includes: The terminal determines target HARQ-ACK feedback information, where the target HARQ-ACK feedback information is feedback information corresponding to a first downlink channel, the first downlink channel is a semi-persistent scheduling downlink channel, and a feedback mode of the target HARQ-ACK feedback information is a first feedback mode. The terminal determines a target resource from resources in a target resource configuration, where the target resource configuration includes at least one of the following: a resource configuration corresponding to the first feedback mode, a resource configuration corresponding to a second feedback mode, and a resource configuration corresponding to unicast feedback. The terminal executes a feedback procedure of the target HARQ-ACK feedback information on the target resource, where the first feedback mode is a NACK-only feedback mode, and the second feedback mode is an ACK or NACK feedback mode.

According to a second aspect, a HARQ-ACK information feedback apparatus is provided. The HARQ-ACK information feedback apparatus includes: a determining module and an execution module. The determining module is configured to: determine target HARQ-ACK feedback information, where the target HARQ-ACK feedback information is feedback information corresponding to a first downlink channel, the first downlink channel is a semi-persistent scheduling downlink channel, and a feedback mode of the target HARQ-ACK feedback information is a first feedback mode; and determine a target resource from resources in a target resource configuration, where the target resource configuration includes at least one of the following: a resource configuration corresponding to the first feedback mode, a resource configuration corresponding to a second feedback mode, and a resource configuration corresponding to unicast feedback. The execution module is configured to execute a feedback procedure of the target HARQ-ACK feedback information on the target resource determined by the determining module, where the first feedback mode is a NACK-only feedback mode, and the second feedback mode is an ACK or NACK feedback mode.

According to a third aspect, a terminal is provided. The terminal includes a processor and a memory, the memory stores a program or an instruction that is executable on the processor, and the program or the instruction is executed by the processor to implement the steps of the method according to the first aspect.

According to a fourth aspect, a terminal is provided, and includes a processor and a communication interface. The processor is configured to determine target HARQ-ACK feedback information, where the target HARQ-ACK feedback information is feedback information corresponding to a first downlink channel, the first downlink channel is a semi-persistent scheduling downlink channel, and a feedback mode of the target HARQ-ACK feedback information is a first feedback mode; and determine a target resource from resources in a target resource configuration, where the target resource configuration includes at least one of the following: a resource configuration corresponding to the first feedback mode, a resource configuration corresponding to a second feedback mode, and a resource configuration corresponding to unicast feedback. The communication interface is configured to execute a feedback procedure of the target HARQ-ACK feedback information on the target resource, where the first feedback mode is a NACK-only feedback mode, and the second feedback mode is an ACK or NACK feedback mode.

According to a fifth aspect, a readable storage medium is provided. The readable storage medium stores a program or an instruction, and the program or the instruction is executed by a processor to implement the steps of the method according to the first aspect.

According to a sixth aspect, a chip is provided. The chip includes a processor and a communication interface, the communication interface is coupled to the processor, and the processor is configured to run a program or an instruction to implement steps of the method according to the first aspect.

According to a seventh aspect, a computer program/program product is provided. The computer program/program product is stored in a storage medium, and the computer program/program product is executed by at least one processor to implement the steps of the method according to the first aspect.

In the embodiments of this application, the terminal may first determine the target HARQ-ACK feedback information corresponding to the semi-persistent scheduling first downlink channel (where the feedback mode of the target HARQ-ACK feedback information is the first feedback mode), and then determine the target resource from the resources in the target resource configuration (for example, at least one of the resource configuration corresponding to the first feedback mode, the resource configuration corresponding to the second feedback mode, and the resource configuration corresponding to the unicast feedback), so that the terminal may execute the feedback procedure of the target HARQ-ACK feedback information on the target resource, where the first feedback mode is the NACK-only feedback mode, and the second feedback mode is the ACK or NACK feedback mode. When the terminal feeds back, according to the NACK-only feedback mode, the target HARQ-ACK feedback information corresponding to the first downlink channel, the terminal may determine the target resource from the resources in at least one of the resource configuration corresponding to the first feedback mode, the resource configuration corresponding to the second feedback mode, and the resource configuration corresponding to the unicast feedback. In other words, the terminal may determine the target resource from the resources in a large number of resource configurations (that is, a large number of resources). Therefore, a case of insufficient resources can be reduced, to reduce a case in which the terminal cannot feed back the target HARQ-ACK feedback information to a network side device. In this way, communication effectiveness can be improved.

### BRIEF DESCRIPTION OF DRAWINGS

FIG. 1 is a block diagram of a wireless communication system according to an embodiment of this application;
FIG. 2 is a first schematic flowchart of a HARQ-ACK information feedback method according to an embodiment of this application;
FIG. 3 is a second schematic flowchart of a HARQ-ACK information feedback method according to an embodiment of this application;
FIG. 4 is a schematic diagram of a structure of a HARQ-ACK information feedback apparatus according to an embodiment of this application;
FIG. 5 is a schematic diagram of a structure of a communication device according to an embodiment of this application; and
FIG. 6 is a schematic diagram of a hardware structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The following describes terms used in the embodiments of this application.

### 1. Multicast service

Currently, a new radio (New Radio, NR) technology has undergone evolution of two release standards: Rel-15 and Rel-16. In the two releases, a broadcast/multicast (broadcast/multicast) feature is not supported. However, in many important use scenarios, such as public safety and mission critical (public safety and mission critical), vehicle to X applications (Vehicle to X applications, V2X APP), transparent Internet Protocol version 4/Internet Protocol version 6 multicast delivery (transparent (Internet Protocol Version 4, IPv4)/(Internet Protocol Version 6, IPv6) multicast delivery), Internet Protocol television (Internet Protocol Television, IPTV), software delivery over wireless (Software Delivery Over Wireless), and group communications and Internet of Things applications (Group Communications and IoT Applications), the broadcast/multicast feature can substantially improve communication performance, especially in system efficiency and user experience. Therefore, in a next Rel-17 release, the broadcast/multicast feature is to be introduced into the NR.

In multicast transmission of NR, a multicast (Multicast) service sending in a point to multipoint (Point To Multipoint, PTM) mode is supported. The PTM mode is a multicast sending mode, a PDCCH scrambled by a group radio network temporary identifier (Group Radio Network Temporary Identifier, g-RNTI) schedules a PDSCH scrambled by the G-RNTI, or a SPS PDSCH scrambled by a G-CS-RNTI (Group Configured Scheduled Radio Network Temporary Identifier, G-CS-RNTI) is used for service scheduling and transmission. The PDCCH or the PDSCH scrambled by the G-RNTI may be received simultaneously by a group of terminals.

### 2. HARQ-ACK feedback

After a network side device (such as a base station) transmits a PDSCH or indicates a SPS PDSCH release (release) physical downlink control channel (Physical Downlink Control Channel, PDCCH), and after a terminal completes receiving and decoding, the terminal needs to feed back a decoding result of the PDSCH/PDCCH to the base station, to notify the base station whether the PDSCH/SPS PDSCH release PDCCH has been successfully decoded, so that the base station can make a next scheduling decision according to the feedback. This process is referred to as HARQ-ACK feedback.

Usually, there may be two types of HARQ-ACK feedback: HARQ-ACK feedback corresponding to unicast PDCCH/PDSCH (referred to as unicast HARQ-ACK feedback below), and HARQ-ACK feedback corresponding to multicast PDCCH/PDSCH (referred to as multicast HARQ-ACK feedback below).

### (1) Unicast HARQ-ACK feedback

In a scenario of the unicast HARQ-ACK feedback:
For HARQ-ACK feedback corresponding to a dynamically scheduled PDSCH/PDCCH, or for HARQ-ACK feedback with corresponding downlink control information (Downlink Control Information, DCI), a PUCCH resource for the HARQ-ACK feedback is configured by using a PUCCH resource set in PUCCH-config/PUCCH-ConfigurationList. The terminal determines, according to a physical uplink control channel resource indicator (PUCCH resource indicator, PRI) indication in corresponding last DCI, and/or a control channel element (Control channel element, CCE) index corresponding to the last DCI, the PUCCH resource for feeding back HARQ-ACK information.

For HARQ-ACK feedback corresponding to an SPS PDSCH, or for HARQ-ACK feedback without corresponding DCI, a PUCCH resource for the HARQ-ACK feedback is directly configured by using RRC and does not need to be determined according to an indication of DCI. Specifically, the PUCCH resource may be n1PUCCH-AN (a PUCCH resource whose PUCCH format is a format 0 or 1) or SPS-PUCCH-AN-List (up to 4 PUCCH resources may be configured, a format of the first one of 4 PUCCH resources is format 0 or 1, and in the second to fourth ones of the 4 PUCCH resources, a format of each PUCCH resource may be any one of format 2, 3, or 4). When SPS-PUCCH-AN-List is configured, the terminal determines a to-be-used PUCCH resource according to a number of HARQ-ACK bits fed back (except the 1^{st} PUCCH resource in resources in the list SPS-PUCCH-AN-List, a maximum number of bits of uplink control information (Uplink Control Information, UCI) that can be carried on the PUCCH may be configured for a remaining PUCCH resource by using a corresponding parameter maxPayloadSize.

### (2) Multicast HARQ-ACK feedback

In a scenario of the multicast HARQ-ACK feedback:
Feedback modes of the multicast HARQ-ACK feedback include an ACK/NACK (first HARQ-ACK reporting mode) feedback mode and a NACK-only (second HARQ-ACK reporting mode) feedback mode.

In the ACK/NACK feedback mode, in a case that the terminal successfully decodes a PDSCH/PDCCH, the terminal feeds back ACK information; and in a case that the terminal does not successfully decode a PDSCH/PDCCH, the terminal feeds back NACK information. A feedback mode and a PUCCH resource determining manner of the multicast HARQ-ACK feedback are the same as the feedback mode and the PUCCH resource determining manner of the unicast HARQ-ACK feedback.

In the NACK-only feedback mode, the terminal does not feed back ACK information when successfully decoding a PDSCH/PDCCH, and feeds back NACK information when not successfully decoding a PDSCH/PDCCH. In a case that one PUCCH includes HARQ-ACK feedback information corresponding to a plurality of PDSCHs or PDCCHs, and all bits of feedback information are ACK, the terminal does not transmit the PUCCH. In other words, the terminal transmits the PUCCH only when the HARQ-ACK feedback information includes NACK information.

The terminal may be configured with one or more G-RNTIs/G-CS-RNTIs, and the base station configures a feedback mode of a multicast PDSCH for each G-RNTI/G-CS-RNTI. The base station may configure a PUCCH resource for the terminal by using pucch-ConfigurationListMulticast1 and/or pucch-ConfigurationListMulticast2, where pucch-ConfigurationListMulticast1 is used for multicast HARQ-ACK feedback of the ACK/NACK feedback mode, and pucch-ConfigurationListMulticast2 is used for multicast HARQ-ACK feedback of the NACK-only feedback mode. For HARQ-ACK information corresponding to a multicast PDSCH, in a case that a feedback mode of the multicast PDSCH is the NACK-only feedback mode, to support feedback of multi-bit NACK-only (that is, HARQ-ACK information of a plurality of multicast PDSCHs) in one PUCCH slot, two modes: a mode 1 and a mode 2 are standardized. The base station may configure the terminal to use the mode 1 or the mode 2 by using a higher-layer parameter, such as moreThanOneNackOnlyMode.

Herein, in a case that the mode 1 is configured (for example, when the terminal is not configured with the parameter moreThanOneNackOnlyMode, it indicates that the terminal is configured to use the mode 1), the terminal converts multi-bit HARQ-ACK to ACK/NACK feedback, and determines a PUCCH resource in pucch-ConfigurationListMulticast1 corresponding to the ACK/NACK according to an indication of DCI.

In a case that the mode 2 is configured (for example, when the terminal is configured with the parameter moreThanOneNackOnlyMode), the terminal transmits different HARQ-ACK information according to a PUCCH resource selection manner (for example, transmits a bit of one piece of corresponding HARQ-ACK information on one specific PUCCH resource or one specific sequence), where a predefined table specifies a mapping relationship between a bit of one piece of HARQ-ACK information and one PUCCH resource; and the terminal determines, according to the predefined table, a PUCCH resource for feeding back the HARQ-ACK information.

The PUCCH resource is configured by using PUCCH-config/PUCCH-ConfigurationList corresponding to the NACK-only feedback mode, that is, pucch-ConfigurationListMulticast2, and for a dynamically scheduled PDSCH, specifically, a resource list resourceList configured in a PUCCH resource set in pucch-ConfigurationListMulticast2.

It should be noted that a PUCCH resource set may be configured in PUCCH-config/PUCCH-ConfigurationList corresponding to the NACK-only feedback mode (that is, pucch-ConfigurationListMulticast2), and one or more PUCCH resources (up to 32 PUCCH resources) are configured in the PUCCH resource set by using a higher-layer parameter such as resourceList.

### 3. Other terms

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, in the description and the claims, "and/or" represents at least one of connected objects, and a character "/" generally represents an "or" relationship between associated objects.

It should be noted that technologies described in the embodiments of this application are not limited to a Long Term Evolution (Long Term Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application may be used interchangeably. The technologies described can be applied to both the systems and the radio technologies mentioned above as well as to other systems and radio technologies. A new radio (New Radio, NR) system is described in the following description for illustrative purposes, and the NR terminology is used in most of the following description, although these technologies can also be applied to applications other than the NR system application, such as the 6^{th} generation (6^{th} Generation, 6G) communication system.

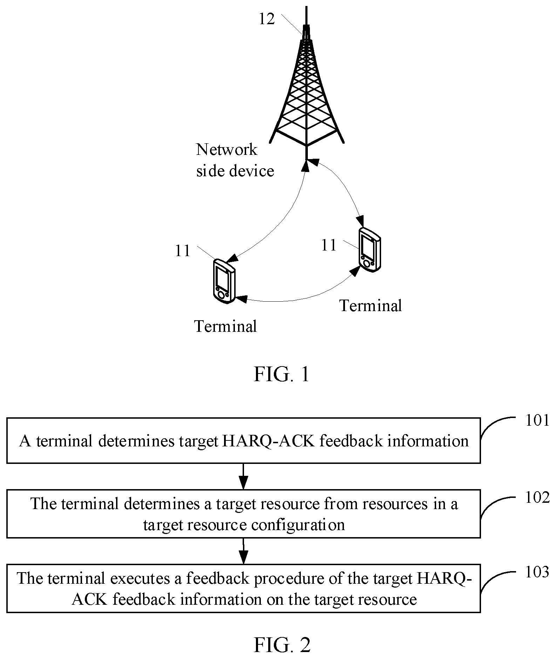

FIG. 1 is a block diagram of a wireless communication system to which the embodiments of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (Virtual Reality, VR) device, a robot, a wearable device (Wearable Device), vehicle user equipment (VUE), pedestrian user equipment (PUE), a smart home (a home device with a wireless communication function, such as a refrigerator, a television, a washing machine, or a furniture), a game console, a personal computer (Personal Computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart chain, and the like), a smart wrist strap, a smart dress, and the like. It should be noted that a specific type of the terminal 11 is not limited in the embodiments of this application. The network side device 12 may include an access network device or a core network device. The access network device may also be referred to as a radio access network device, a radio access network (Radio Access Network, RAN), a radio access network function, or a radio access network unit. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another appropriate term in the field. Provided that a same technical effect is achieved, the base station is not limited to a specified technical term. It should be noted that, in the embodiments of this application, only a base station in an NR system is used as an example for description, and a specific type of the base station is not limited.

With reference to the accompanying drawings, the following describes in detail a HARQ-ACK information feedback method and apparatus, and a related product provided in the embodiments of this application by using some embodiments and application scenarios thereof.

Currently, when a terminal uses a NACK-only feedback mode to feed back HARQ-ACK information corresponding to a plurality of multicast SPS PDSCHs to a network side device in a time unit (such as a PUCCH slot), in a case that the terminal is configured with a parameter moreThanOneNackOnlyMode, the terminal needs to transmit HARQ-ACK information of up to 4 bits according to a PUCCH resource selection manner. To transmit the HARQ-ACK information of up to 4 bits, up to 15 PUCCH resources are needed. However, for an existing SPS PDSCH feedback resource configuration, up to 4 PUCCH resources may be configured in SPS-PUCCH-AN-List. Therefore, the PUCCH resources may be insufficient, and the terminal cannot feed back the HARQ-ACK information corresponding to the plurality of multicast SPS PDSCHs to the network side device.

However, in the embodiments of this application, when a terminal uses a NACK-only feedback mode to feed back HARQ-ACK information corresponding to a plurality of multicast SPS PDSCHs to a network side device in a time unit (such as a PUCCH slot), in a case that the terminal is configured with a parameter moreThanOneNackOnlyMode, the terminal may determine a feedback resource from resources in at least one of a resource configuration (that is, pucch-ConfigurationListMulticast2 or n1PUCCH-AN) corresponding to the NACK-only feedback mode, a resource configuration (that is, pucch-ConfigurationListMulticast1 or n1PUCCH-AN) corresponding to an ACK/NACK feedback mode, and a resource configuration (that is, PUCCH-config/PUCCH-ConfigurationList) corresponding to unicast HARQ-ACK feedback, and execute, on the feedback resource, a feedback procedure of the HARQ-ACK information corresponding to the multicast SPS PDSCH. The terminal may determine the feedback resource from the resources in the at least one of the resource configuration (that is, pucch-ConfigurationListMulticast2 or n1PUCCH-AN) corresponding to the NACK-only feedback mode, the resource configuration (that is, pucch-ConfigurationListMulticast1 or n1PUCCH-AN) corresponding to the ACK/NACK feedback mode, and the resource configuration (that is, PUCCH-config/PUCCH-ConfigurationList) corresponding to the unicast HARQ-ACK feedback. In other words, the terminal may determine a target resource from resources in a large number of resource configurations (that is, a large number of resources). Therefore, a case of insufficient PUCCH resources can be reduced, to reduce a case in which the terminal cannot feed back the HARQ-ACK information corresponding to the plurality of multicast SPS PDSCHs to the network side device.

FIG. 2 is a flowchart of a HARQ-ACK information feedback method according to an embodiment of this application. As shown in FIG. 2, the HARQ-ACK information feedback method provided in this embodiment of this application includes step 101 to step 103.

Step 101: A terminal determines target HARQ-ACK feedback information.

In this embodiment of this application, the target HARQ-ACK feedback information is feedback information corresponding to a first downlink channel, the first downlink channel is a semi-persistent scheduling downlink channel, a feedback mode of the target HARQ-ACK feedback information is a first feedback mode, and the first feedback mode is a NACK-only feedback mode.

It should be noted that the target HARQ-ACK feedback information may be understood as HARQ-ACK feedback information without corresponding scheduling DCI.

Optionally, in this embodiment of this application, the first downlink channel is a multicast SPS PDSCH. The target HARQ-ACK feedback information may include at least two pieces of HARQ-ACK feedback information. The first downlink channel may include at least two multicast SPS PDSCHs. Each multicast SPS PDSCH corresponds to one piece of HARQ-ACK feedback information.

Optionally, in this embodiment of this application, when the terminal receives the first downlink channel, the terminal may decode the first downlink channel and determine the target HARQ-ACK feedback information according to a decoding result.

It may be understood that in a case that the decoding result of the terminal decoding the first downlink channel includes a failure, the target HARQ-ACK feedback information includes NACK information. In this case, the terminal needs to feed back the target HARQ-ACK feedback information to a network side device.

It may be understood that the feedback mode of the target HARQ-ACK feedback information is the first feedback mode. The first feedback mode is the NACK-only feedback mode. In other words, the terminal transmits a PUCCH carrying HARQ-ACK information only when the HARQ-ACK information includes a NACK. The network side device configures a corresponding HARQ-ACK feedback mode for a G-CS-RNTI. The terminal determines, according to a G-CS-RNTI corresponding to the first downlink channel, that a HARQ-ACK feedback mode is the NACK-only feedback mode. When the first downlink channel includes a plurality of SPS PDSCHs, a HARQ-ACK feedback mode corresponding to each SPS PDSCH is the NACK-only feedback mode.

Step 102: The terminal determines a target resource from resources in a target resource configuration.

Optionally, in this embodiment of this application, in a case that the terminal is configured with a first parameter, and the terminal needs to feed back only the target HARQ-ACK feedback information in one time unit (such as a PUCCH slot or sub-slot), the terminal may determine the target resource from the resources in the target resource configuration. The first parameter may be specifically moreThanOneNackOnlyMode. The first parameter is used to indicate to the terminal that transmission of one PUCCH supports a mode of more than one NACK-only feedback transmission.

It should be noted that the above "transmission of one PUCCH supports more than one NACK-only feedback" may be understood as that feedback of a plurality of pieces of HARQ-ACK information corresponding to the NACK-only mode on one PUCCH is supported.

In this embodiment of this application, the target resource configuration includes at least one of the following: a resource configuration corresponding to the first feedback mode, a resource configuration corresponding to a second feedback mode, and a resource configuration corresponding to unicast feedback; and the second feedback mode is an ACK or NACK feedback mode.

It should be noted that the above "resource configuration corresponding to the first feedback mode" may be understood as a resource configuration configured by the network side device for the terminal to execute a feedback procedure of the HARQ-ACK feedback information according to the first feedback mode. The above "resource configuration corresponding to the second feedback mode" may be understood as a resource configuration configured by the network side device for the terminal to execute a feedback procedure of the HARQ-ACK feedback information according to the second feedback mode.

Optionally, the first feedback mode or the second feedback mode indicates a HARQ-ACK feedback mode corresponding to multicast downlink transmission.

Optionally, in this embodiment of this application, the resource configuration corresponding to the first feedback mode may specifically include at least one of the following: PUCCH-config/PUCCH-ConfigurationList corresponding to the first feedback mode (that is, the NACK-only feedback mode (namely, the NACK-only mode) or a second HARQ-ACK reporting mode), and n1PUCCH-AN corresponding to a multicast SPS PDSCH HARQ-ACK feedback.

PUCCH-config corresponding to the first feedback mode (that is, the NACK-only mode), and/or PUCCH-ConfigurationList corresponding to the first feedback mode (that is, the NACK-only mode) may be pucch-ConfigurationListMulticast2, where pucch-ConfigurationListMulticast2 may configure one or two PUCCH-configs, which correspond to low-priority HARQ-ACK feedback and high-priority HARQ-ACK feedback respectively. A PUCCH resource set is configured in each PUCCH-config, and the PUCCH resource set includes at least one PUCCH resource.

n1PUCCH-AN may be a feedback resource configured by the network side device for the first downlink channel, that is, n1PUCCH-AN configured in a configuration parameter SPS-config of the first downlink channel.

Optionally, in this embodiment of this application, the resource configuration corresponding to the second feedback mode may specifically include at least one of the following: PUCCH-config corresponding to the second feedback mode (that is, the ACK or NACK feedback mode (namely, the ACK/NACK mode) or a first HARQ-ACK reporting mode), and PUCCH-ConfigurationList and n1PUCCH-AN that correspond to the second feedback mode (that is, the ACK/NACK mode).

PUCCH-config corresponding to the second feedback mode (that is, the ACK/NACK mode), and/or PUCCH-ConfigurationList corresponding to the second feedback mode (that is, the ACK/NACK mode) are/is, for example, pucch-ConfigurationListMulticast1, where pucch-ConfigurationListMulticast1 may configure one or two PUCCH-configs. In a case that two PUCCH-configs are configured, the two PUCCH-configs respectively correspond to low-priority HARQ-ACK feedback and high-priority HARQ-ACK feedback, a PUCCH resource set is configured in each PUCH-config, and each PUCCH resource set includes at least one PUCCH resource.

PUCCH-config corresponding to unicast HARQ-ACK feedback and/or PUCCH-configurationList corresponding to the unicast HARQ-ACK feedback may be the parameter PUCCH-config/PUCCH-configurationList, where pucch-ConfigurationList may configure one or two PUCCH-configs. In a case that two PUCCH-configs are configured, the two PUCCH-configs respectively correspond to low-priority HARQ-ACK feedback and high-priority HARQ-ACK feedback, a PUCCH resource set is configured in each PUCH-config, and each PUCCH resource set includes at least one PUCCH resource.

Step 103: The terminal executes a feedback procedure of the target HARQ-ACK feedback information on the target resource.

Optionally, in this embodiment of this application, in a case that the target resource configuration is the resource configuration corresponding to the first feedback mode, the terminal may execute the feedback procedure of the target HARQ-ACK feedback information on the target resource according to the first feedback mode.

Optionally, in this embodiment of this application, in a case that the target resource configuration is the resource configuration corresponding to the second feedback mode, the terminal may execute the feedback procedure of the target HARQ-ACK feedback information on the target resource according to the second feedback mode.

It may be understood that the terminal may convert the first feedback mode into the second feedback mode to execute the feedback procedure of the target HARQ-ACK feedback information according to the second feedback mode.

It should be noted that for descriptions of the feedback procedure of the HARQ-ACK feedback information, refer to specific descriptions in the related technology. Details are not described herein again in this embodiment of this application.

According to the HARQ-ACK information feedback method provided in this embodiment of this application, the terminal may first determine the target HARQ-ACK feedback information corresponding to the semi-persistent scheduling first downlink channel (where the feedback mode of the target HARQ-ACK feedback information is the first feedback mode), and then determine the target resource from the resources in the target resource configuration (for example, at least one of the resource configuration corresponding to the first feedback mode, the resource configuration corresponding to the second feedback mode, and the resource configuration corresponding to the unicast feedback), so that the terminal may execute the feedback procedure of the target HARQ-ACK feedback information on the target resource, where the first feedback mode is the NACK-only feedback mode, and the second feedback mode is the ACK or NACK feedback mode. When the terminal feeds back, in the NACK-only feedback mode, the target HARQ-ACK feedback information corresponding to the first downlink channel, the terminal may determine the target resource from the resources in at least one of the resource configuration corresponding to the first feedback mode, the resource configuration corresponding to the second feedback mode, and the resource configuration corresponding to the unicast feedback. In other words, the terminal may determine the target resource from the resources in a large number of resource configurations (that is, a large number of resources). Therefore, a case of insufficient resources can be reduced, to reduce a case in which the terminal cannot feed back the target HARQ-ACK feedback information to a network side device. In this way, communication effectiveness can be improved.

Different examples are used for description below.

### Example 1

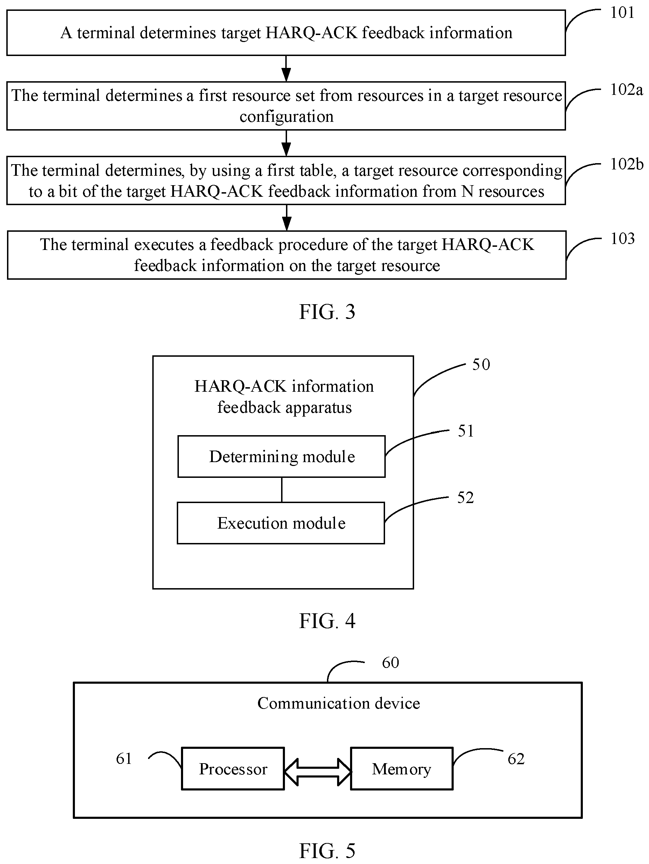

Optionally, in this embodiment of this application, the target resource configuration includes the resource configuration corresponding to the first feedback mode. Specifically, with reference to FIG. 2, as shown in FIG. 3, the foregoing step 102 may be specifically implemented by performing the following steps 102a and 102b.

Step 102a: The terminal determines a first resource set from resources in the target resource configuration.

In this embodiment of this application, the first resource set includes N resources, where N is a positive integer.

Optionally, in this embodiment of this application, the first resource set may include at least one of the following:
a resource in resources in a PUCCH resource set in pucch-ConfigurationListMulticast2;
a resource in sps-PUCCH-AN-ListMulticast in pucch-ConfigurationListMulticast2; and
a resource in n1PUCCH-AN.

The first resource set may be specifically all or some of PUCCH resources in the resources in the PUCCH resource set in pucch-ConfigurationListMulticast2.

The first resource set may be specifically all or some of resources in sps-PUCCH-AN-ListMulticast in pucch-ConfigurationListMulticast2.

Optionally, in this embodiment of this application, the network side device may configure a large number of PUCCH resources (such as 15 PUCCH resources) in sps-PUCCH-AN-ListMulticast in pucch-ConfigurationListMulticast2, and a format of each PUCCH resource is 0 or 1, to reduce a case of insufficient resources. For example, M-bit multicast SPS PDSCH HARQ-ACK information is fed back in one PUCCH slot, and a feedback mode of each HARQ-ACK is the NACK-only mode. Therefore, the base station may configure at least 2^{M}-1 PUCCH resources through sps-PUCCH-AN-ListMulticast in pucch-ConfigurationListMulticast2, where M is a positive integer.

The first resource set may be specifically the resource configured through n1PUCCH-AN.

Optionally, in this embodiment of this application, the terminal may determine the first resource set from the resources in the target resource configuration according to a first rule. The first rule may be agreed in a protocol.

The first rule may be selected according to a configuration of a higher-layer parameter, a number of bits of a HARQ-ACK fed back, a feedback mode corresponding to the HARQ-ACK, a parameter configuration of a resource, and the like. The parameter configuration of the resource includes at least one of the following: a PUCCH format, a start symbol, a number of symbols in a slot, an index of a start physical resource block (Physical Resource Block, PRB), a number of PRBs, a number of bits of carried UCI, and the like.

Optionally, in this embodiment of this application, the foregoing step 102a may be specifically implemented by performing at least one of the following steps 102a1 to 102a3.

Step 102a1: The terminal determines a resource set in the resource configuration corresponding to the first feedback mode as the first resource set.

Optionally, in this embodiment of this application, the first resource set may be specifically the PUCCH resource in pucch-ConfigurationListMulticast2.

Specifically, a PUCCH resource set may be configured in pucch-ConfigurationListMulticast2, and N resources are configured in the PUCCH resource set by using a resource table such as a parameter resourceList.

Step 102a2: In a case that a number of bits of the target HARQ-ACK feedback information is less than or equal to a first threshold, the terminal determines a second resource set in the resource configuration corresponding to the first feedback mode as the first resource set.

In this embodiment of this application, the second resource set includes any one of the following: a resource list used for HARQ-ACK feedback for semi-persistent scheduling, and a first configuration resource, and the first configuration resource is a resource used for HARQ-ACK feedback for semi-persistent scheduling.

Optionally, in this embodiment of this application, in a case that the second resource set is the resource list used for HARQ-ACK feedback for semi-persistent scheduling, the second resource set may be specifically the resource configured in sps-PUCCH-AN-ListMulticast in pucch-ConfigurationListMulticast2.

Optionally, in this embodiment of this application, in a case that the second resource set is the first configuration resource, the second resource set may be specifically the resource configured in n1PUCCH-AN.

Optionally, in this embodiment of this application, the first threshold is any one of the following:
a predefined positive integer; and
a first parameter value.

In this embodiment of this application, the first parameter value is determined based on a number of resources included in the second resource set.

Optionally, in this embodiment of this application, the predefined positive integer may include any one of the following: 1 and 2.

Optionally, in this embodiment of this application, the first parameter value is specifically calculated by using a first algorithm according to the number of resources included in the second resource set.

The first algorithm may be specifically: N1=floor (log₂ (K)), where N1 is the first threshold, and K is the number of resources included in the second resource set.

Step 102a3: In a case that a number of bits of the target HARQ-ACK feedback information is greater than a first threshold, the terminal determines a resource set in the resource configuration corresponding to the first feedback mode as the first resource set.

Optionally, in this embodiment of this application, the first resource set may be specifically the PUCCH resource configured in the PUCCH resource set in pucch-ConfigurationListMulticast2.

Step 102b: The terminal determines, by using a first table, the target resource corresponding to a bit of the target HARQ-ACK feedback information from the N resources.

Optionally, in this embodiment of this application, the first table may be specifically a table agreed in the protocol.

In this embodiment of this application, the first table includes at least one correspondence, and each correspondence is a correspondence between a bit of one piece of HARQ-ACK information and one resource.

Optionally, in this embodiment of this application, each correspondence is a correspondence between one value of a bit of HARQ-ACK information and one resource.

It can be learned that the terminal may determine, by using the first table, the target resource corresponding to the bit of the target HARQ-ACK feedback information from the N resources in the determined first resource set, to execute the feedback procedure of the target HARQ-ACK feedback information on the target resource, so that a case in which the target resource cannot meet the target HARQ-ACK feedback information can be avoided.

Optionally, in this embodiment of this application, the foregoing step 103 may be specifically implemented by performing at least one of the following steps 103a to 103c.

Step 103a: The terminal executes the feedback procedure of the target HARQ-ACK feedback information on the target resource according to the first feedback mode.

Step 103b: In a case that a number of bits of the target HARQ-ACK feedback information is less than or equal to a third threshold, the terminal executes the feedback procedure of the target HARQ-ACK feedback information on the target resource according to the first feedback mode.

Optionally, in this embodiment of this application, the third threshold is any one of the following:
a predefined positive integer; and
a third parameter value.

Optionally, in this embodiment of this application, the predefined positive integer may include any one of the following: 1 and 2.

In this embodiment of this application, the third parameter value is determined based on a number of resources included in a sixth resource set in the resource configuration corresponding to the first feedback mode; and the sixth resource set includes any one of the following: a resource list used for HARQ-ACK feedback for semi-persistent scheduling, and a third configuration resource, and the third configuration resource is a resource used for HARQ-ACK feedback for semi-persistent scheduling.

It should be noted that for descriptions of a determining manner of the third parameter value, refer to the specific descriptions of the determining manner of the first parameter value in the foregoing embodiment. Details are not described herein again in this embodiment of this application.

Step 103c: In a case that a number of bits of the target HARQ-ACK feedback information is greater than a third threshold, the terminal executes a feedback procedure of first HARQ-ACK feedback information in the target HARQ-ACK feedback information on the target resource.

In this embodiment of this application, a number of bits of the first HARQ-ACK feedback information is the third threshold.

Optionally, in this embodiment of this application, in the case that the number of bits of the target HARQ-ACK feedback information is greater than the third threshold, the terminal may first determine the first HARQ-ACK feedback information from the target HARQ-ACK feedback information according to a second rule, and then execute the feedback procedure of the first HARQ-ACK feedback information. The second rule may be agreed in the protocol.

The second rule may include any one of the following: selecting the first bit, selecting the last bit, and the like.

For example, assuming that the third threshold is N3 and the second rule is selecting the first bit, the terminal may select the first N3 bits from the target HARQ-ACK feedback information to obtain the first HARQ-ACK feedback information.

For another example, assuming that the third threshold is N3 and the second rule is selecting the last bit, the terminal may select the last N3 bits from the target HARQ-ACK feedback information to obtain the first HARQ-ACK feedback information.

Optionally, in this embodiment of this application, the terminal may execute the feedback procedure of the first HARQ-ACK feedback information on the target resource according to the first feedback mode; or the terminal may execute the feedback procedure of the first HARQ-ACK feedback information on the target resource according to the second feedback mode.

Optionally, in this embodiment of this application, the HARQ-ACK information feedback method provided in this embodiment of this application may further include the following step 201.

Step 201: The terminal does not expect the number of bits of the target HARQ-ACK feedback information to be greater than the third threshold.

In this embodiment of this application, when the network side device performs scheduling, it is ensured that in one time unit (such as a PUCCH time unit), a number of SPS PDSCHs in the NACK-only mode for feedback does not exceed the third threshold, that is, a number of first downlink channels does not exceed the third threshold.

It should be noted that the number of SPS PDSCHs in the NACK-only mode for feedback does not exceed the third threshold, indicating that only a HARQ-ACK feedback of the SPS PDSCH in the NACK-only mode for feedback is included in the time unit, and a number of bits of the HARQ-ACK feedback does not exceed the third threshold.

Optionally, in this embodiment of this application, only a HARQ-ACK feedback of the SPS PDSCH in the NACK-only mode for feedback is included in one time unit for HARQ-ACK feedback with a same priority.

### Example 2

Optionally, in this embodiment of this application, the foregoing step 102 may be specifically implemented by performing at least one of the following steps 102c to 102e.

Step 102c: The terminal determines the target resource from a third resource set in a first resource configuration.

In this embodiment of this application, the first resource configuration includes any one of the following: the resource configuration corresponding to the second feedback mode, and the resource configuration corresponding to the unicast feedback; and the third resource set is a resource list used for HARQ-ACK feedback for semi-persistent scheduling.

In a case that the first resource configuration is the resource configuration corresponding to the second feedback mode, the first resource configuration may be specifically PUCCH-config or PUCCH-ConfigurationList corresponding to the second feedback mode of multicast transmission, for example, PUCCH-configMulitcast1 or PUCCH-ConfigurationListMulitcast1.

In a case that the first resource configuration is the resource configuration corresponding to the unicast feedback, the first resource configuration may be specifically PUCCH-config/PUCCH-ConfigurationList corresponding to unicast HARQ-ACK feedback.

Optionally, in this embodiment of this application, the third resource set may include at least one of the following:
a resource in sps-PUCCH-AN-ListMulticast in pucch-ConfigurationListMulticast1;
a resource in sps-PUCCH-AN-List in PUCCH-config or pucch-ConfigurationList; and
a resource in n1PUCCH-AN.

The third resource set may be specifically all or some of PUCCH resources in sps-PUCCH-AN-ListMulticast in pucch-ConfigurationListMulticast1.

The third resource set may be specifically the resource in sps-PUCCH-AN-List in PUCCH-config or pucch-ConfigurationList.

Optionally, in this application, the multicast HARQ-ACK feedback may indicate a HARQ-ACK of a PDCCH/PDSCH scrambled by a G-RNTI/G-CS-RNTI; and the unicast HARQ-ACK feedback may indicate a HARQ-ACK of a PDCCH/PDSCH scrambled by a C-RNTI/CS-RNTI, an MCS-RNTI, or the like.

Optionally, in this embodiment of this application, the terminal may determine the target resource from the third resource set according to a third rule. The third rule may be agreed in the protocol.

The third rule may be selected according to a configuration of a higher-layer parameter, a number of bits of a HARQ-ACK fed back, a feedback mode corresponding to the HARQ-ACK, a parameter configuration of a resource, and the like. The parameter configuration of the resource includes at least one of the following: a PUCCH format, a start symbol, a number of symbols in a slot, an index of a start physical resource block (Physical Resource Block, PRB), a number of PRBs, a number of bits of carried UCI, and the like.

Step 102d: In a case that a number of bits of the target HARQ-ACK feedback information is less than or equal to a second threshold, the terminal determines the target resource from a fourth resource set in the resource configuration corresponding to the first feedback mode.

In this embodiment of this application, the fourth resource set includes any one of the following: a resource list used for HARQ-ACK feedback for semi-persistent scheduling, and a second configuration resource, and the second configuration resource is a resource used for HARQ-ACK feedback for semi-persistent scheduling.

Optionally, in this embodiment of this application, in a case that the fourth resource set is the resource list used for HARQ-ACK feedback for semi-persistent scheduling, the fourth resource set may be specifically the resource configured in sps-PUCCH-AN-ListMulticast in pucch-ConfigurationListMulticast2.

Optionally, in this embodiment of this application, in a case that the fourth resource set is the second configuration resource, the fourth resource set may be specifically the resource configured in n1PUCCH-AN.

Optionally, in this embodiment of this application, the second threshold is any one of the following:
a predefined positive integer; and
a second parameter value.

In this embodiment of this application, the second parameter value is determined based on a number of resources included in the fourth resource set.

Optionally, in this embodiment of this application, the predefined positive integer may include any one of the following: 1 and 2.

It should be noted that for descriptions of a determining manner of the second parameter value, refer to the specific descriptions of the determining manner of the first parameter value in the foregoing embodiment. Details are not described herein again in this embodiment of this application.

Optionally, in this embodiment of this application, the terminal may determine, by using the first table, the target resource corresponding to the bit of the target HARQ-ACK feedback information from the resources in the fourth resource set.

It should be noted that for descriptions of the first table, refer to the specific descriptions in the foregoing embodiment. Details are not described herein again in this embodiment of this application.

Step 102e: In a case that a number of bits of the target HARQ-ACK feedback information is greater than a second threshold, the terminal determines the target resource from a fifth resource set in the first resource configuration.

In this embodiment of this application, the fifth resource set is a resource list used for HARQ-ACK feedback for semi-persistent scheduling.

Optionally, in this embodiment of this application, the fifth resource set may be specifically sps-PUCCH-AN-ListMulticast in pucch-ConfigurationListMulticast1.

Optionally, in this embodiment of this application, the fifth resource set may be specifically sps-PUCCH-AN-List in pucch-ConfigurationList.

Optionally, in this embodiment of this application, the terminal may determine the target resource from the fifth resource set according to a fourth rule. The fourth rule may be agreed in the protocol.

The fourth rule may be selected according to a configuration of a higher-layer parameter, a number of bits of a HARQ-ACK fed back, a feedback mode corresponding to the HARQ-ACK, a parameter configuration of a resource, and the like. The parameter configuration of the resource includes at least one of the following: a PUCCH format, a start symbol, a number of symbols in a slot, an index of a start physical resource block (Physical Resource Block, PRB), a number of PRBs, a number of bits of carried UCI, and the like.

Optionally, in this embodiment of this application, the foregoing step 103 may be specifically implemented by performing at least one of the following steps 103d to 103f.

Step 103d: The terminal executes the feedback procedure of the target HARQ-ACK feedback information on the target resource according to the second feedback mode.

It may be understood that the terminal may convert the first feedback mode into the second feedback mode to execute the feedback procedure of the target HARQ-ACK feedback information according to the second feedback mode.

Step 103e: In a case that a number of bits of the target HARQ-ACK feedback information is less than or equal to a third threshold, the terminal executes the feedback procedure of the target HARQ-ACK feedback information on the target resource according to the first feedback mode.

Step 103f: In a case that a number of bits of the target HARQ-ACK feedback information is greater than a third threshold, the terminal executes the feedback procedure of the target HARQ-ACK feedback information on the target resource according to the second feedback mode.

The HARQ-ACK information feedback method provided in the embodiments of this application may be performed by a HARQ-ACK information feedback apparatus. In the embodiments of this application, the HARQ-ACK information feedback apparatus provided in the embodiments of this application is described by using an example in which the HARQ-ACK information feedback apparatus performs the HARQ-ACK information feedback method.

FIG. 4 is a possible schematic diagram of a structure of a HARQ-ACK information feedback apparatus according to an embodiment of this application. As shown in FIG. 4, the HARQ-ACK information feedback apparatus 50 includes: a determining module 51 and an execution module 52.

The determining module 51 is configured to: determine target HARQ-ACK feedback information, where the target HARQ-ACK feedback information is feedback information corresponding to a first downlink channel, the first downlink channel is a semi-persistent scheduling downlink channel, and a feedback mode of the target HARQ-ACK feedback information is a first feedback mode; and determine a target resource from resources in a target resource configuration, where the target resource configuration includes at least one of the following: a resource configuration corresponding to the first feedback mode, a resource configuration corresponding to a second feedback mode, and a resource configuration corresponding to unicast feedback. The execution module 52 is configured to execute a feedback procedure of the target HARQ-ACK feedback information on the target resource determined by the determining module 51, where the first feedback mode is a NACK-only feedback mode, and the second feedback mode is an ACK or NACK feedback mode.

In a possible implementation, the target resource configuration includes the resource configuration corresponding to the first feedback mode. The determining module 51 is specifically configured to: determine a first resource set from resources in the resource configuration corresponding to the first feedback mode, where the first resource set includes N resources, and N is a positive integer; and determine, by using a first table, the target resource corresponding to a bit of the target HARQ-ACK feedback information from the N resources, where the first table includes at least one correspondence, and each correspondence is a correspondence between a bit of one piece of HARQ-ACK information and one resource.

In a possible implementation, the determining module 51 is specifically configured to perform at least one of the following: determining a resource set in the resource configuration corresponding to the first feedback mode as the first resource set; in a case that a number of bits of the target HARQ-ACK feedback information is less than or equal to a first threshold, determining a second resource set in the resource configuration corresponding to the first feedback mode as the first resource set; and in a case that a number of bits of the target HARQ-ACK feedback information is greater than a first threshold, determining a resource set in the resource configuration corresponding to the first feedback mode as the first resource set, where the second resource set includes any one of the following: a resource list used for HARQ-ACK feedback for semi-persistent scheduling, and a first configuration resource, and the first configuration resource is a resource used for HARQ-ACK feedback for semi-persistent scheduling.

In a possible implementation, the first threshold is any one of the following: a predefined positive integer; and a first parameter value, where the first parameter value is determined based on a number of resources included in the second resource set.

In a possible implementation, the determining module 51 is specifically configured to perform at least one of the following: determining the target resource from a third resource set in a first resource configuration; in a case that a number of bits of the target HARQ-ACK feedback information is less than or equal to a second threshold, determining the target resource from a fourth resource set in the resource configuration corresponding to the first feedback mode; and in a case that a number of bits of the target HARQ-ACK feedback information is greater than a second threshold, determining the target resource from a fifth resource set in the first resource configuration, where
the first resource configuration includes any one of the following: the resource configuration corresponding to the second feedback mode, and the resource configuration corresponding to the unicast feedback; the third resource set is a resource list used for HARQ-ACK feedback for semi-persistent scheduling; the fourth resource set includes any one of the following: a resource list used for HARQ-ACK feedback for semi-persistent scheduling, and a second configuration resource, and the second configuration resource is a resource used for HARQ-ACK feedback for semi-persistent scheduling; and the fifth resource set is a resource list used for HARQ-ACK feedback for semi-persistent scheduling.

In a possible implementation, the execution module 52 is specifically configured to perform at least one of the following: executing the feedback procedure of the target HARQ-ACK feedback information on the target resource according to the second feedback mode; in the case that the number of bits of the target HARQ-ACK feedback information is less than or equal to the second threshold, executing the feedback procedure of the target HARQ-ACK feedback information on the target resource according to the first feedback mode; and in the case that the number of bits of the target HARQ-ACK feedback information is greater than the second threshold, executing the feedback procedure of the target HARQ-ACK feedback information on the target resource according to the second feedback mode.

In a possible implementation, the second threshold is any one of the following: a predefined positive integer; and a second parameter value, where the second parameter value is determined based on a number of resources included in the fourth resource set.

In a possible implementation, the execution module 52 is configured to perform at least one of the following: executing the feedback procedure of the target HARQ-ACK feedback information on the target resource according to the first feedback mode; in a case that a number of bits of the target HARQ-ACK feedback information is less than or equal to a third threshold, executing the feedback procedure of the target HARQ-ACK feedback information on the target resource according to the first feedback mode; and in a case that a number of bits of the target HARQ-ACK feedback information is greater than a third threshold, executing a feedback procedure of first HARQ-ACK feedback information in the target HARQ-ACK feedback information on the target resource, where a number of bits of the first HARQ-ACK feedback information is the third threshold.

In a possible implementation, the execution module 52 is further configured not to expect the number of bits of the target HARQ-ACK feedback information to be greater than the third threshold.

In a possible implementation, the third threshold is any one of the following: a predefined positive integer; and a third parameter value, where the third parameter value is determined based on a number of resources included in a sixth resource set in the resource configuration corresponding to the first feedback mode; and the sixth resource set includes any one of the following: a resource list used for HARQ-ACK feedback for semi-persistent scheduling, and a third configuration resource, and the third configuration resource is a resource used for HARQ-ACK feedback for semi-persistent scheduling.

According to the HARQ-ACK information feedback apparatus provided in this embodiment of this application, when the HARQ-ACK information feedback apparatus feeds back, in the NACK-only feedback mode, the target HARQ-ACK feedback information corresponding to the first downlink channel, the HARQ-ACK information feedback apparatus may determine the target resource from the resources in at least one of the resource configuration corresponding to the first feedback mode, the resource configuration corresponding to the second feedback mode, and the resource configuration corresponding to the unicast feedback. In other words, the HARQ-ACK information feedback apparatus may determine the target resource from the resources in a large number of resource configurations (that is, a large number of resources). Therefore, a case of insufficient resources can be reduced, to reduce a case in which the HARQ-ACK information feedback apparatus cannot feed back the target HARQ-ACK feedback information to a network side device. In this way, communication effectiveness can be improved.

The HARQ-ACK information feedback apparatus in this embodiment of this application may be an electronic device, for example, an electronic device with an operating system, or may be a component in the electronic device, for example, an integrated circuit or a chip. The electronic device may be a terminal, or another device other than the terminal. For example, the terminal may include but is not limited to the foregoing listed types of the terminal 11. The another device may be a server, a network attached storage (Network Attached Storage, NAS), or the like. This is not specifically limited in this embodiment of this application.

The HARQ-ACK information feedback apparatus provided in this embodiment of this application can implement the processes implemented in the method embodiments of FIG. 2 and FIG. 3, and achieve a same technical effect. To avoid repetition, details are not described herein again.

Optionally, in the embodiments of this application, as shown in FIG. 5, an embodiment of this application further provides a communication device 60, including a processor 61 and a memory 62, and the memory 62 stores a program or an instruction that is executable on the processor 61. For example, in a case that the communication device 60 is a terminal, when the program or the instruction is executed by the processor 61, the steps in the foregoing embodiments of the HARQ-ACK information feedback method, and a same technical effect can be achieved. To avoid repetition, details are not described herein again.

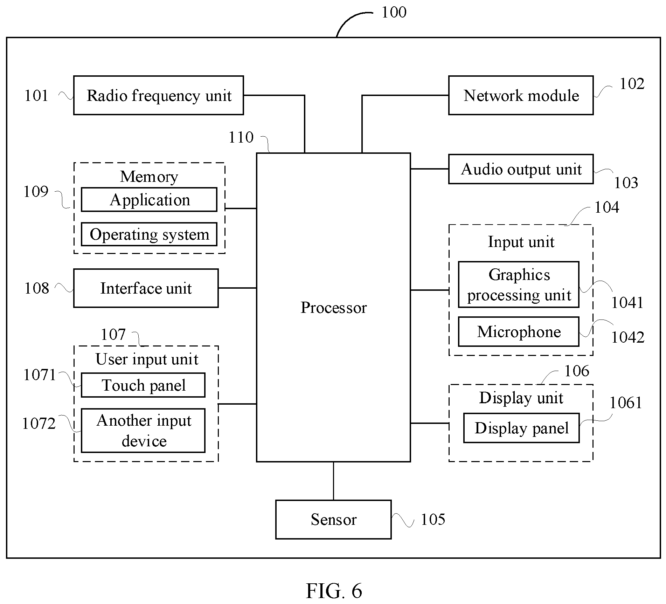

An embodiment of this application further provides a terminal, including a processor and a communication interface. The processor is configured to determine target HARQ-ACK feedback information, where the target HARQ-ACK feedback information is feedback information corresponding to a first downlink channel, the first downlink channel is a semi-persistent scheduling downlink channel, and a feedback mode of the target HARQ-ACK feedback information is a first feedback mode; and determine a target resource from resources in a target resource configuration, where the target resource configuration includes at least one of the following: a resource configuration corresponding to the first feedback mode, a resource configuration corresponding to a second feedback mode, and a resource configuration corresponding to unicast feedback. The communication interface is configured to execute a feedback procedure of the target HARQ-ACK feedback information on the target resource, where the first feedback mode is a NACK-only feedback mode, and the second feedback mode is an ACK or NACK feedback mode. The terminal embodiment is corresponding to the method embodiment on the terminal side, each implementation process and implementation of the method embodiment can be applied to the terminal embodiment, and a same technical effect can be achieved. Specifically, FIG. 6 is a schematic diagram of a hardware structure of a terminal according to an embodiment of this application.

The terminal 100 includes but is not limited to at least a part of components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the terminal 100 may further include a power supply (such as a battery) that supplies power to each component. The power supply may be logically connected to the processor 110 by using a power supply management system, to implement functions such as charging and discharging management, and power consumption management by using the power supply management system. The terminal structure shown in FIG. 6 constitutes no limitation on the terminal, and the terminal may include more or fewer components than those shown in the figure, or combine some components, or have different component arrangements. Details are not described herein.

It should be understood that in this embodiment of this application, the input unit 104 may include a graphics processing unit (Graphics Processing Unit, GPU) 1041 and a microphone 1042. The graphics processing unit 1041 processes image data of a static picture or a video obtained by an image capture apparatus (for example, a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 101 may transmit the downlink data to the processor 110 for processing. In addition, the radio frequency unit 101 may send uplink data to the network side device. Generally, the radio frequency unit 101 includes but is not limited to an antenna, an amplifier, a transceiver, a coupler, a low noise amplifier, a duplexer, and the like.

The memory 109 may be configured to store a software program or an instruction and various data. The memory 109 may mainly include a first storage area for storing a program or an instruction and a second storage area for storing data. The first storage area may store an operating system, and an application or an instruction required by at least one function (for example, a sound playing function or an image playing function). In addition, the memory 109 may be a volatile memory or a non-volatile memory, or the memory 109 may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 109 in this embodiment of this application includes but is not limited to these memories and any memory of another proper type.

The processor 110 may include one or more processing units. Optionally, an application processor and a modem processor are integrated into the processor 110. The application processor mainly processes an operating system, a user interface, an application, and the like. The modem processor mainly processes a wireless communication signal, for example, a baseband processor. It may be understood that, alternatively, the modem processor may not be integrated into the processor 110.

The processor 110 is configured to: determine target HARQ-ACK feedback information, where the target HARQ-ACK feedback information is feedback information corresponding to a first downlink channel, the first downlink channel is a semi-persistent scheduling downlink channel, and a feedback mode of the target HARQ-ACK feedback information is a first feedback mode; and determine a target resource from resources in a target resource configuration, where the target resource configuration includes at least one of the following: a resource configuration corresponding to the first feedback mode, a resource configuration corresponding to a second feedback mode, and a resource configuration corresponding to unicast feedback.

The radio frequency unit 101 is configured to execute a feedback procedure of the target HARQ-ACK feedback information on the target resource, where
the first feedback mode is a NACK-only feedback mode, and the second feedback mode is an ACK or NACK feedback mode.

According to the terminal provided in this embodiment of this application, when the terminal feeds back, in the NACK-only feedback mode, the target HARQ-ACK feedback information corresponding to the first downlink channel, the terminal may determine the target resource from the resources in at least one of the resource configuration corresponding to the first feedback mode, the resource configuration corresponding to the second feedback mode, and the resource configuration corresponding to the unicast feedback. In other words, the terminal may determine the target resource from the resources in a large number of resource configurations (that is, a large number of resources). Therefore, a case of insufficient resources can be reduced, to reduce a case in which the terminal cannot feed back the target HARQ-ACK feedback information to a network side device. In this way, communication effectiveness can be improved.

Optionally, in this embodiment of this application, the target resource configuration includes the resource configuration corresponding to the first feedback mode.

The processor 110 is specifically configured to: determine a first resource set from resources in the resource configuration corresponding to the first feedback mode, where the first resource set includes N resources, and N is a positive integer; and determine, by using a first table, the target resource corresponding to a bit of the target HARQ-ACK feedback information from the N resources, where
the first table includes at least one correspondence, and each correspondence is a correspondence between a bit of one piece of HARQ-ACK information and one resource.

Optionally, in this embodiment of this application, the processor 110 is specifically configured to perform at least one of the following: determining a resource set in the resource configuration corresponding to the first feedback mode as the first resource set; in a case that a number of bits of the target HARQ-ACK feedback information is less than or equal to a first threshold, determining a second resource set in the resource configuration corresponding to the first feedback mode as the first resource set; and in a case that a number of bits of the target HARQ-ACK feedback information is greater than a first threshold, determining a resource set in the resource configuration corresponding to the first feedback mode as the first resource set, where
the second resource set includes any one of the following: a resource list used for HARQ-ACK feedback for semi-persistent scheduling, and a first configuration resource, and the first configuration resource is a resource used for HARQ-ACK feedback for semi-persistent scheduling.

Optionally, in this embodiment of this application, the processor 110 is specifically configured to perform at least one of the following: determining the target resource from a third resource set in a first resource configuration; in a case that a number of bits of the target HARQ-ACK feedback information is less than or equal to a second threshold, determining, by the terminal, the target resource from a fourth resource set in the resource configuration corresponding to the first feedback mode; and in a case that a number of bits of the target HARQ-ACK feedback information is greater than a second threshold, determining the target resource from a fifth resource set in the first resource configuration, where
the first resource configuration includes any one of the following: the resource configuration corresponding to the second feedback mode, and the resource configuration corresponding to the unicast feedback; the third resource set is a resource list used for HARQ-ACK feedback for semi-persistent scheduling; the fourth resource set includes any one of the following: a resource list used for HARQ-ACK feedback for semi-persistent scheduling, and a second configuration resource, and the second configuration resource is a resource used for HARQ-ACK feedback for semi-persistent scheduling; and the fifth resource set is a resource list used for HARQ-ACK feedback for semi-persistent scheduling.

Optionally, in this embodiment of this application, the processor 110 is specifically configured to perform at least one of the following: executing the feedback procedure of the target HARQ-ACK feedback information on the target resource according to the second feedback mode; in the case that the number of bits of the target HARQ-ACK feedback information is less than or equal to the second threshold, executing the feedback procedure of the target HARQ-ACK feedback information on the target resource according to the first feedback mode; and in the case that the number of bits of the target HARQ-ACK feedback information is greater than the second threshold, executing the feedback procedure of the target HARQ-ACK feedback information on the target resource according to the second feedback mode.

Optionally, in this embodiment of this application, the processor 110 is specifically configured to perform at least one of the following: executing the feedback procedure of the target HARQ-ACK feedback information on the target resource according to the first feedback mode; in a case that a number of bits of the target HARQ-ACK feedback information is less than or equal to a third threshold, executing the feedback procedure of the target HARQ-ACK feedback information on the target resource according to the first feedback mode; and in a case that a number of bits of the target HARQ-ACK feedback information is greater than a third threshold, executing a feedback procedure of first HARQ-ACK feedback information in the target HARQ-ACK feedback information on the target resource, where a number of bits of the first HARQ-ACK feedback information is the third threshold.

Optionally, in this embodiment of this application, the processor 110 is further configured not to expect the number of bits of the target HARQ-ACK feedback information to be greater than the third threshold.

An embodiment of this application further provides a readable storage medium. The readable storage medium stores a program or an instruction, and the program or the instruction is executed by a processor to implement the processes of the foregoing HARQ-ACK information feedback method embodiment, and a same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or an instruction to implement the processes of the foregoing HARQ-ACK information feedback method embodiment, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the program/program product is executed by at least one processor to implement the processes of the foregoing HARQ-ACK information feedback method embodiment, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A hybrid automatic repeat request acknowledgement HARQ-ACK information feedback method, comprising:
determining, by a terminal, target HARQ-ACK feedback information, wherein the target HARQ-ACK feedback information is feedback information corresponding to a first downlink channel, the first downlink channel is a semi-persistent scheduling downlink channel, and a feedback mode of the target HARQ-ACK feedback information is a first feedback mode;
determining, by the terminal, a target resource from resources in a target resource configuration, wherein the target resource configuration comprises at least one of the following: a resource configuration corresponding to the first feedback mode, a resource configuration corresponding to a second feedback mode, and a resource configuration corresponding to unicast feedback; and
executing, by the terminal, a feedback procedure of the target HARQ-ACK feedback information on the target resource, wherein
the first feedback mode is a negative acknowledgement only feedback mode, and the second feedback mode is an acknowledgement ACK or NACK feedback mode.

2. The method according to claim 1, wherein the target resource configuration comprises the resource configuration corresponding to the first feedback mode; and
the determining, by the terminal, a target resource from resources in a target resource configuration comprises:
determining, by the terminal, a first resource set from resources in the resource configuration corresponding to the first feedback mode, wherein the first resource set comprises N resources, and N is a positive integer; and
determining, by the terminal by using a first table, the target resource corresponding to a bit of the target HARQ-ACK feedback information from the N resources, wherein
the first table comprises at least one correspondence, and each correspondence is a correspondence between a bit of one piece of HARQ-ACK information and one resource.

3. The method according to claim 2, wherein the determining, by the terminal, a first resource set from resources in the target resource configuration comprises at least one of the following:
determining, by the terminal, a resource set in the resource configuration corresponding to the first feedback mode as the first resource set;
in a case that a number of bits of the target HARQ-ACK feedback information is less than or equal to a first threshold, determining, by the terminal, a second resource set in the resource configuration corresponding to the first feedback mode as the first resource set; and
in a case that a number of bits of the target HARQ-ACK feedback information is greater than a first threshold, determining, by the terminal, a resource set in the resource configuration corresponding to the first feedback mode as the first resource set, wherein
the second resource set comprises any one of the following: a resource list used for HARQ-ACK feedback for semi-persistent scheduling, and a first configuration resource, and the first configuration resource is a resource used for HARQ-ACK feedback for semi-persistent scheduling.

4. The method according to claim 3, wherein the first threshold is any one of the following:
a predefined positive integer; and
a first parameter value, wherein
the first parameter value is determined based on a number of resources comprised in the second resource set.

5. The method according to claim 1, wherein the determining, by the terminal, a target resource from resources in a target resource configuration comprises at least one of the following:
determining, by the terminal, the target resource from a third resource set in a first resource configuration;
in a case that a number of bits of the target HARQ-ACK feedback information is less than or equal to a second threshold, determining, by the terminal, the target resource from a fourth resource set in the resource configuration corresponding to the first feedback mode; and
in a case that a number of bits of the target HARQ-ACK feedback information is greater than a second threshold, determining, by the terminal, the target resource from a fifth resource set in the first resource configuration, wherein
the first resource configuration comprises any one of the following: the resource configuration corresponding to the second feedback mode, and the resource configuration corresponding to the unicast feedback;
the third resource set is a resource list used for HARQ-ACK feedback for semi-persistent scheduling;
the fourth resource set comprises any one of the following: a resource list used for HARQ-ACK feedback for semi-persistent scheduling, and a second configuration resource, and the second configuration resource is a resource used for HARQ-ACK feedback for semi-persistent scheduling; and
the fifth resource set is a resource list used for HARQ-ACK feedback for semi-persistent scheduling.

6. The method according to claim 5, wherein the executing, by the terminal, a feedback procedure of the target HARQ-ACK feedback information on the target resource comprises at least one of the following:
executing, by the terminal, the feedback procedure of the target HARQ-ACK feedback information on the target resource according to the second feedback mode;
in the case that the number of bits of the target HARQ-ACK feedback information is less than or equal to the second threshold, executing, by the terminal, the feedback procedure of the target HARQ-ACK feedback information on the target resource according to the first feedback mode; and
in the case that the number of bits of the target HARQ-ACK feedback information is greater than the second threshold, executing, by the terminal, the feedback procedure of the target HARQ-ACK feedback information on the target resource according to the second feedback mode.

7. The method according to claim 5, wherein the second threshold is any one of the following:
a predefined positive integer; and
a second parameter value, wherein
the second parameter value is determined based on a number of resources comprised in the fourth resource set.

8. The method according to claim 1, wherein the executing, by the terminal, a feedback procedure of the target HARQ-ACK feedback information on the target resource comprises at least one of the following:
executing, by the terminal, the feedback procedure of the target HARQ-ACK feedback information on the target resource according to the first feedback mode;
in a case that a number of bits of the target HARQ-ACK feedback information is less than or equal to a third threshold, executing, by the terminal, the feedback procedure of the target HARQ-ACK feedback information on the target resource according to the first feedback mode; and
in a case that a number of bits of the target HARQ-ACK feedback information is greater than a third threshold, executing, by the terminal, a feedback procedure of first HARQ-ACK feedback information in the target HARQ-ACK feedback information on the target resource, wherein
a number of bits of the first HARQ-ACK feedback information is the third threshold.

9. The method according to claim 8, wherein the method further comprises:
not expecting, by the terminal, the number of bits of the target HARQ-ACK feedback information to be greater than the third threshold.

10. The method according to claim 8, wherein the third threshold is any one of the following:
a predefined positive integer; and
a third parameter value, wherein
the third parameter value is determined based on a number of resources comprised in a sixth resource set in the resource configuration corresponding to the first feedback mode; and
the sixth resource set comprises any one of the following: a resource list used for HARQ-ACK feedback for semi-persistent scheduling, and a third configuration resource, and the third configuration resource is a resource used for HARQ-ACK feedback for semi-persistent scheduling.

11. AHARQ-ACK information feedback apparatus, wherein the HARQ-ACK information feedback apparatus comprises: a determining module and an execution module, wherein
the determining module is configured to: determine target HARQ-ACK feedback information, wherein the target HARQ-ACK feedback information is feedback information corresponding to a first downlink channel, the first downlink channel is a semi-persistent scheduling downlink channel, and a feedback mode of the target HARQ-ACK feedback information is a first feedback mode; and
determine a target resource from resources in a target resource configuration, wherein the target resource configuration comprises at least one of the following: a resource configuration corresponding to the first feedback mode, a resource configuration corresponding to a second feedback mode, and a resource configuration corresponding to unicast feedback; and
the execution module is configured to execute a feedback procedure of the target HARQ-ACK feedback information on the target resource determined by the determining module, wherein
the first feedback mode is a NACK-only feedback mode, and the second feedback mode is an ACK or NACK feedback mode.

12. The HARQ-ACK information feedback apparatus according to claim 11, wherein the target resource configuration comprises the resource configuration corresponding to the first feedback mode; and
the determining module is specifically configured to: determine a first resource set from resources in the resource configuration corresponding to the first feedback mode, wherein the first resource set comprises N resources, and N is a positive integer; and determine, by using a first table, the target resource corresponding to a bit of the target HARQ-ACK feedback information from the N resources, wherein
the first table comprises at least one correspondence, and each correspondence is a correspondence between a bit of one piece of HARQ-ACK information and one resource.

13. The HARQ-ACK information feedback apparatus according to claim 12, wherein the determining module is specifically configured to perform at least one of the following:
determining a resource set in the resource configuration corresponding to the first feedback mode as the first resource set;
in a case that a number of bits of the target HARQ-ACK feedback information is less than or equal to a first threshold, determining a second resource set in the resource configuration corresponding to the first feedback mode as the first resource set; and
in a case that a number of bits of the target HARQ-ACK feedback information is greater than a first threshold, determining a resource set in the resource configuration corresponding to the first feedback mode as the first resource set, wherein
the second resource set comprises any one of the following: a resource list used for HARQ-ACK feedback for semi-persistent scheduling, and a first configuration resource, and the first configuration resource is a resource used for HARQ-ACK feedback for semi-persistent scheduling.

14. The HARQ-ACK information feedback apparatus according to claim 13, wherein the first threshold is any one of the following:
a predefined positive integer; and
a first parameter value, wherein
the first parameter value is determined based on a number of resources comprised in the second resource set.

15. The HARQ-ACK information feedback apparatus according to claim 11, wherein the determining module is specifically configured to perform at least one of the following:
determining the target resource from a third resource set in a first resource configuration;
in a case that a number of bits of the target HARQ-ACK feedback information is less than or equal to a second threshold, determining the target resource from a fourth resource set in the resource configuration corresponding to the first feedback mode; and
in a case that a number of bits of the target HARQ-ACK feedback information is greater than a second threshold, determining the target resource from a fifth resource set in the first resource configuration, wherein
the first resource configuration comprises any one of the following: the resource configuration corresponding to the second feedback mode, and the resource configuration corresponding to the unicast feedback;
the third resource set is a resource list used for HARQ-ACK feedback for semi-persistent scheduling;
the fourth resource set comprises any one of the following: a resource list used for HARQ-ACK feedback for semi-persistent scheduling, and a second configuration resource, and the second configuration resource is a resource used for HARQ-ACK feedback for semi-persistent scheduling; and
the fifth resource set is a resource list used for HARQ-ACK feedback for semi-persistent scheduling.

16. The HARQ-ACK information feedback apparatus according to claim 15, wherein the execution module is specifically configured to perform at least one of the following:
executing the feedback procedure of the target HARQ-ACK feedback information on the target resource according to the second feedback mode;
in the case that the number of bits of the target HARQ-ACK feedback information is less than or equal to the second threshold, executing the feedback procedure of the target HARQ-ACK feedback information on the target resource according to the first feedback mode; and
in the case that the number of bits of the target HARQ-ACK feedback information is greater than the second threshold, executing the feedback procedure of the target HARQ-ACK feedback information on the target resource according to the second feedback mode.

17. The HARQ-ACK information feedback apparatus according to claim 15, wherein the second threshold is any one of the following:
a predefined positive integer; and
a second parameter value, wherein
the second parameter value is determined based on a number of resources comprised in the fourth resource set.

18. The HARQ-ACK information feedback apparatus according to claim 11, wherein the execution module is configured to perform at least one of the following:
executing the feedback procedure of the target HARQ-ACK feedback information on the target resource according to the first feedback mode;
in a case that a number of bits of the target HARQ-ACK feedback information is less than or equal to a third threshold, executing the feedback procedure of the target HARQ-ACK feedback information on the target resource according to the first feedback mode; and
in a case that a number of bits of the target HARQ-ACK feedback information is greater than a third threshold, executing a feedback procedure of first HARQ-ACK feedback information in the target HARQ-ACK feedback information on the target resource, wherein
a number of bits of the first HARQ-ACK feedback information is the third threshold.

19. The HARQ-ACK information feedback apparatus according to claim 18, wherein the execution module is further configured not to expect the number of bits of the target HARQ-ACK feedback information to be greater than the third threshold.

20. The HARQ-ACK information feedback apparatus according to claim 18, wherein the third threshold is any one of the following:
a predefined positive integer; and
a third parameter value, wherein
the third parameter value is determined based on a number of resources comprised in a sixth resource set in the resource configuration corresponding to the first feedback mode; and
the sixth resource set comprises any one of the following: a resource list used for HARQ-ACK feedback for semi-persistent scheduling, and a third configuration resource, and the third configuration resource is a resource used for HARQ-ACK feedback for semi-persistent scheduling.

21. A terminal, comprising a processor and a memory, wherein the memory stores a program or an instruction that is executable on the processor, and the program or the instruction is executed by the processor to implement the steps of the HARQ-ACK information feedback method according to any one of claims 1 to 10.

22. A readable storage medium, wherein the readable storage medium stores a program or an instruction, and when the program or the instruction is executed by a processor, steps of the HARQ-ACK information feedback method according to any one of claims 1 to 10 are implemented.
